# EUROPEAN PATENT SPECIFICATION

(11) **EP 2 775 180 B1**
(45) Date of publication and mention of the grant of the patent: **08.04.2020**
(21) Application number: 14155994.8
(22) Date of filing: 20.02.2014
(51) Int. Cl.: G21C 9/004, G21D 1/02, G21D 3/06, F16K 17/00, F16K 51/00

(54) **Alternative air supply and exhaust port for air-operated valve**
Alternativer Lufteinlass- und -auslassschlitz für luftbetriebene Ventile
Port d'alimentation et d'évacuation d'air pour soupape à commande pneumatique

(30) Priority: 06.03.2013 JP 2013044416
(43) Date of publication of application: 10.09.2014
(73) Proprietor: Hitachi-GE Nuclear Energy, Ltd., Hitachi-shi Ibaraki 317-0073 (JP)
(72) Inventor: Kubota, Ryo, Ibaraki, 317-0073 (JP); Onodera, Kenji, Ibaraki, 317-0073 (JP); Kiyotoki, Yoshihisa, Ibaraki, 317-0073 (JP)
(74) Representative: MERH-IP Matias Erny Reichl Hoffmann Patentanwälte PartG mbB

(56) References cited:
- JP-A- H0 580 191
- US-A- 5 049 353
- US-A- 5 091 144
- US-A1- 2011 249 784

## Description

### FIELD OF THE INVENTION

The present invention relates to a gas supply apparatus and an air or nitrogen supply apparatus in an nuclear power plant and relates to, for example, a gas supply apparatus and an air or nitrogen supply apparatus in an nuclear power plant suitable to an apparatus in which an solenoid valve is mounted in some midpoint of a piping system for switching valve closing/opening operation like an air operated valve mounted in an nuclear power plant.

### BACKGROUND OF THE INVENTION

In various plants including an nuclear power plant, piping for passing gases such as air, nitrogen, and steam and liquids such as water are mounted. In some midpoint in the piping, an electric-operated valve for adjusting flow rate, pressure, and the like and an air or nitrogen operation valve by an opening operation for passing fluid in the piping, a closing operation for interruption, or an operation using electricity, compressed air, nitrogen or the like by an electric signal or an air pressure signal are mounted.

In particular, in an air or nitrogen operation valve mounted in an nuclear power plant, an solenoid valve is provided in some midpoint in an air piping system for switching the opening and closing action of the valve. For example, at the time of station blackout (SBO), although a fail operation is performed because of coil non-excitation of the solenoid valve or decrease in air pressure from the air supply source, after that, electricity from a power supply cannot be supplied and air from an air supply apparatus cannot be supplied. Consequently, the operation of the air operated valve cannot be performed, and there is the possibility that the following operation of the air or nitrogen operation valve is hindered.

Since the air operated valve has the possibility that it is operated due to no supply of electricity from the power supply or no supply of air from the air supply apparatus as described above, equipment which can be remotely controlled safely also in the case of emergency (for example, at the time of SBO) is in demand.

On the other hand, Japanese Unexamined Patent Application Publication No. 2012-230058 discloses a technique for addressing a case where station blackout occurs and hydrogen generated in a nuclear reactor pressure vessel leaks in a nuclear reactor building by safely treating the hydrogen to prevent hydrogen explosion and prevent breakage of the nuclear reactor building.

Usually, the opening and closing action of an air or nitrogen operation valve is switched by turning on/off the power supply of an solenoid valve mounted in some midpoint of an air piping system for supplying air or nitrogen as power of the valve. In the case of power loss, however, due to loss of the power supply and loss of the source of air for power, the power supply of the solenoid valve for operation of opening and closing the air or nitrogen operation valve cannot be turned on/off, and air or nitrogen as power cannot be supplied, so that remote operation from the outside becomes impossible. However, in an accident event larger than a trouble as a design basis, a necessary air or nitrogen operation valve has to be remotely operated from the outside by a power supply/power air supply different from the normal power supply/power air supply without exerting an influence on the normal operation characteristics of the air or nitrogen operation valve.

Particularly, in an nuclear power plant, to enable the air or nitrogen operation valve in a nuclear reactor containment vessel to be opened/closed in the case of emergency such as SBO, an solenoid valve for operation is mounted on the outside of the nuclear reactor containment vessel, and a power supply such as a battery different from a normal power supply is connected. To perform an operation of opening and closing the air or nitrogen operation valve, the operation characteristics such as operation time required for the air or nitrogen operation valve should not be influenced and consideration on exhaust of an operation air to the outside of the nuclear reactor containment vessel is necessary. It is necessary to assure an operation source of the air or nitrogen supply apparatus used at the time of power loss in which the above matters are considered.

However, in Japanese Unexamined Patent Application Publication No. 2012-230058, although means for preventing damage of the nuclear reactor building even in the case where hydrogen generated in the nuclear reactor pressure vessel leaks in the nuclear reactor building at the time of station blackout is written, assurance of the operation source of the air or nitrogen supply apparatus used at the time of power loss is not written.

JP H 0580191 A relates to a drive air changeover circuit 5 installed in a vessel 2 of a boiling water type nuclear reactor, wherein the supply side is connected with an externally provided air supply source via a drive air supply line while the exhaust side is left open to inside the reactor vessel 2. An air operating valve 3 is provided, which is driven by this changeover circuit 5 and an air cylinder 4 in connection therewith, wherein an air exhaust line 17 is furnished whose one end is connected with the exhaust side of the drive air changeover circuit 5 and other end is left open to outside the reactor vessel 2.

The present invention has been achieved in consideration of the above-described points and an object of the invention is to provide a gas supply apparatus and an air or nitrogen supply apparatus of an nuclear power plant including an operation valve such as the air operated valve which can be remotely operated also at the time of power loss.

The aforementioned object is solved by the invention according to the independent claim 1. Further preferred developments are described by the dependent claims.

### SUMMARY OF THE INVENTION

A nuclear power plant including a gas supply apparatus which comprises: an operation valve mounted in some midpoint of a piping for passing at least gas in a plant and operating a valve body by the gas flowing in the piping; a first solenoid valve mounted in some midpoint of the piping and allowing/stopping flow of the gas to the operation valve; and a gas supply source provided outside a building for supplying gas to the first solenoid valve at the time of power loss, and a gas supply line provided inside the building for supplying gas to the first solenoid valve in normal use time. A switching valve for switching between exhaust from the first solenoid valve and gas supply to the first solenoid valve is mounted in an exhaust line of the first solenoid valve and, at the time of power loss, the switching valve is switched to connection to the gas supply source for supplying gas to the first solenoid valve. The gas supply source is connected to the piping via a second solenoid valve, mounted in the piping outside of the building and driven by a power supply of a kind different from that of the first solenoid valve or a manual valve.

The present invention produces an effect that an operation valve such as an air operated valve can be remotely operated even at the time of power loss.

### BRIEF DESCRIPTION OF THE DRAWINGS

Fig. 1 is a diagram illustrating a first embodiment of a gas supply apparatus of the present invention and shows a state where a switching valve is connected on an exhaust side of an solenoid valve;
Fig. 2 is a diagram illustrating a state where the switching valve is switched from the state of Fig. 1 to an air supply side of the solenoid valve;
Fig. 3 is a diagram illustrating a standby state in normal time in the first embodiment of a gas supply apparatus of the present invention;
Fig. 4 is a diagram illustrating an air supply state in normal time in the first embodiment of the gas supply apparatus of the present invention;
Fig. 5 is a diagram illustrating an exhaust state in normal time in the first embodiment of the gas supply apparatus of the present invention;
Fig. 6 is a diagram illustrating a standby state at the time of power loss in the first embodiment of the gas supply apparatus of the present invention;
Fig. 7 is a diagram illustrating a gas supply state at the time of power loss in the first embodiment of the gas supply apparatus of the present invention;
Fig. 8 is a diagram illustrating an exhaust state at the time of power loss in the first embodiment of the gas supply apparatus of the present invention;
Fig. 9 is a diagram illustrating the flow of a gas supply state at the normal time of the gas supply apparatus shown in Fig. 4;
Fig. 10 is a diagram illustrating the flow of an exhaust state at the normal time of the gas supply apparatus shown in Fig. 5;
Fig. 11 is a diagram illustrating the flow of a gas supply state at the time of power loss of the gas supply apparatus shown in Fig. 7;
Fig. 12 is a diagram illustrating the flow of an exhaust state at the time of power loss of the gas supply apparatus shown in Fig. 8;
Fig. 13 is a diagram illustrating a second embodiment of a gas supply apparatus of the present invention;
Fig. 14 is a diagram illustrating an air or nitrogen supply apparatus of an nuclear power plant as a first example useful for understanding the present invention;
Fig. 15 is a diagram illustrating an air or nitrogen supply apparatus of an nuclear power plant as a second example useful for understanding the present invention; and
Fig. 16 is a diagram illustrating the case where a gas supply apparatus as a third example useful for understanding the invention is applied to a pressurizer relief valve and a main steam relief valve in a pressurized-water reactor.

### DETAILED DESCRIPTION OF THE PREFERRED EMBODIMENTS AND EXAMPLES

Hereinafter, an air supply apparatus and an air or nitrogen supply apparatus of an nuclear power plant of the present invention will be described on the basis of illustrated embodiments and examples. In the diagrams, black indication of a valve indicates a "close" state, and blank indication indicates an "open" state. The same reference numerals are used for the same components, and description of parts already described will not be repeated.

### First Embodiment

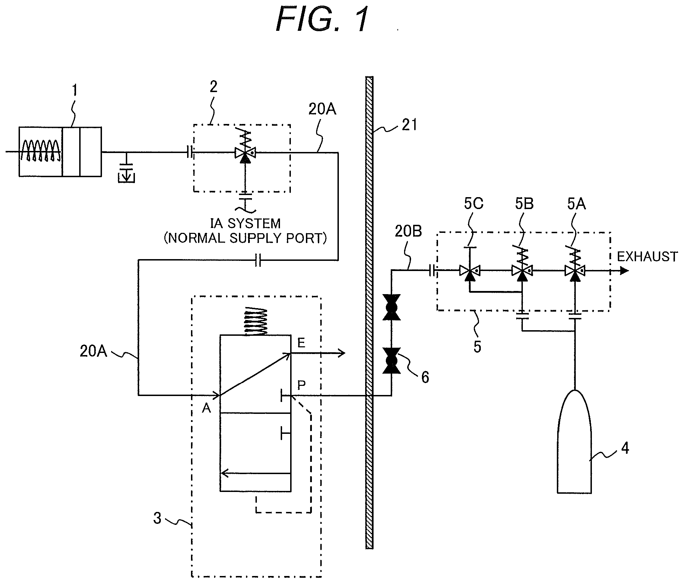

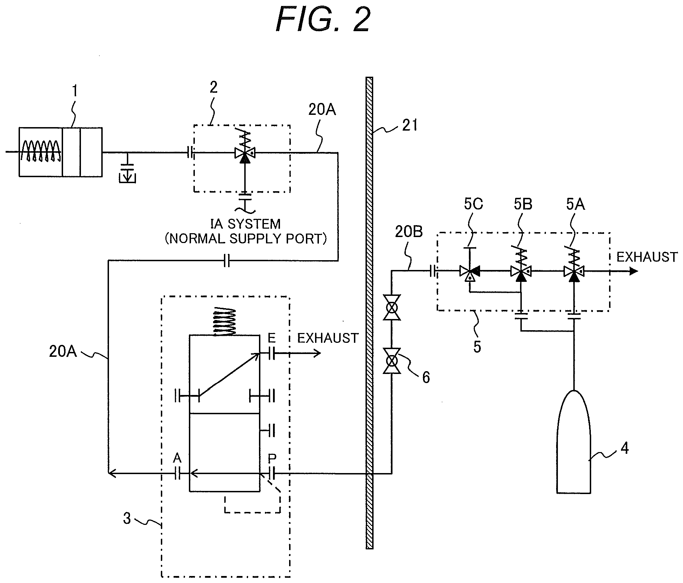

Figs. 1 and 2 illustrate a first embodiment of a gas supply apparatus of the present invention. For example, there is an air operated valve actuator 1 which opens/closes a valve body (not illustrated). The air operated valve actuator 1 is operated by a solenoid valve 2 mounted in some midpoint of a piping 20A in a building 21. Specifically, by turning on/off the power supply of the solenoid valve 2, air or nitrogen for control is supplied from an IA system (instrument air system) as a supply port to operate the air operated valve actuator 1. After completion of operation, by turn-off of the power supply of the solenoid valve 2, the air or nitrogen for control of the air operated valve actuator 1 is ejected from the exhaust port of the solenoid valve 2 in the path from A to E in a switching valve 3, and the air operated valve actuator 1 returns to the state before the operation.

In a state where it is difficult to apply current to the solenoid valve 2 or in case of emergency that it is difficult to supply air or nitrogen for control from the IA system (instrument air system) to the supply port of the solenoid valve 2, by turning on the power supply of a second solenoid valve 5 which will be described later, the air or nitrogen for control is supplied from a tank 4 as a gas supply source which is mounted on the outside of the building 21 and in which air or nitrogen is stored to the switching valve 3 via a second solenoid valve 5. As a result, a flow passage between P and A is formed in the switching valve 3, a passage from the tank 4, the second solenoid valve 5, the switching valve 3, the solenoid valve 2, and the air operated valve actuator 1 is formed, and the air operated valve actuator 1 operates. After completion of the operation, when the power supply of the solenoid valve 5 is turned off, pressure among the second solenoid valve 5, the switching valve 3, the solenoid valve 2, and the air operated valve actuator 1 decreases, and the flow passage of the switching valve 3 is switched to the flow passage from A to E. Further, the air or nitrogen for control of the air operated valve actuator 1 is ejected from the exhaust port of the solenoid valve 2 in the passage from A to E of the switching valve 3, and the air operated valve actuator 1 is reset to the state before the operation.

That is, in the embodiment, the solenoid valve 2 has, as a gas supply source for supplying gas (air or nitrogen), two systems of an IA system (instrument air system) and the tank 4.

In the embodiment, in such a manner, the air operated valve actuator 1 is operated to open/close the valve body. In Figs. 1 and 2, representation of the switching valve 3 follows the JIS symbol representation of the pneumatic-hydraulic circuit diagram.

In the embodiment, in some midpoint of the piping 20A in the building 21 between the solenoid valve 2 and the tank 4, the switching valve 3 switching between exhaust from the solenoid valve 2 and the gas supply to the solenoid valve 2 is mounted. The switching valve 3 is switched to connection to the tank 4 for supplying air or nitrogen to the solenoid valve 2 at the time of power loss.

That is, when the switching valve 3 is provided in some midpoint of the piping 20A in the building 21 on the exhaust line sideof the solenoid valve 2 and air or nitrogen for operation is supplied from the tank 4 provided on the outside of the building 21 to the switching valve 3 via a piping 20B, in normal time, the switching valve 3 connected to the exhaust side of the solenoid valve 2 as illustrated in Fig. 1 is switched to the gas supply side as illustrated in Fig. 2. Also at the time of power loss, air can be supplied to the air operated valve actuator 1.

In some midpoint of the piping 20B on the outside of the building 21 on the side of the tank 4 of the switching valve 3, an isolation valve 6 preventing atmosphere in the building 21 at the normal time from leaking to the outside of the building 21 by leakage on the gas supply side of the switching valve 3 is disposed.

Further, safety of equipment for supplying air or nitrogen to the switching valve 3 can be increased by having a power supply of a kind different from that of the power supply in the building 21, for example, a battery. As a further backup, gas may be supplied by a manual valve.

That is, in the embodiment, the second solenoid valve 5 mounted in the piping 20B on the outside of the building 21 for supplying gas from the tank 4 to the switching valve 3 is constructed by three solenoid valves using, as power supplies, an AC power supply or DC power supply, a DC power supply, and a hand motion. Specifically, as illustrated in Figs. 1 and 2, a second solenoid valve 5A uses an AC power supply or DC power supply as a power source at the time of emergency (No. 1). A second solenoid valve 5B uses a DC power supply (for example, battery) as a power source at the time of emergency (No. 2) . A second solenoid valve 5C is manually operated as a backup.

At the time of power loss, the second solenoid valve 5B using the DC power supply (battery) as a drive source is driven to supply air or nitrogen from the tank 4 to the solenoid valve 2. Leakage to the gas supply side of the switching valve 3 is prevented by the isolation valve 6.

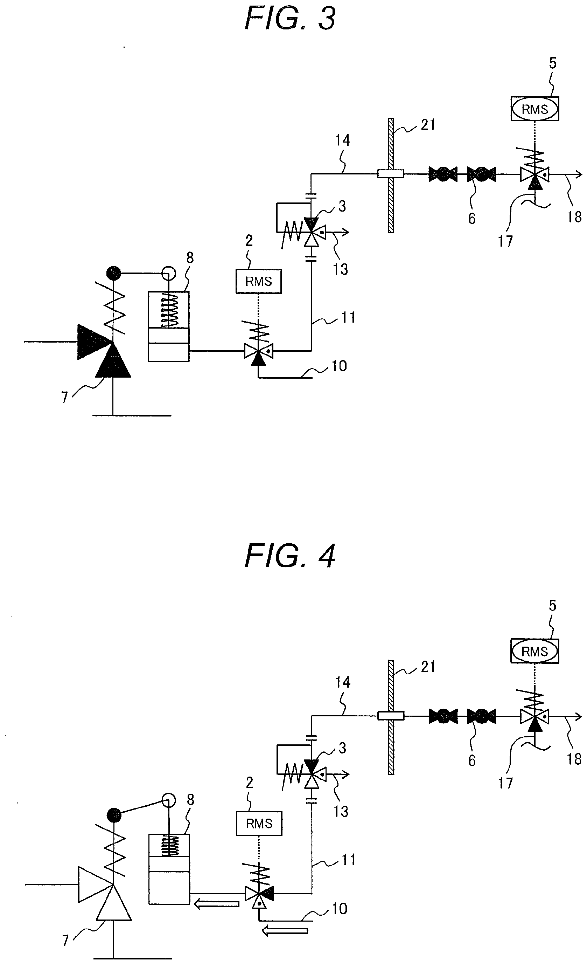

A concrete example of each of the states in the gas supply apparatus of the above-described first embodiment will be described with reference to Figs 3 to 12.

Figs. 3 to 12 illustrate, as a valve body 7, an angle valve having a cylinder 8 as a drive device accompanying a link using air or nitrogen as a power source (which is closed when air or nitrogen is not supplied by spring force). The representation of the switching valve 3 does not follow the JIS symbol representation of the pneumatic-hydraulic circuit diagram. An open/close state is indicated by white or black in a manner similar to the representation of the other valves.

Fig. 3 illustrates a standby state in normal use time of a gas supply apparatus of the present invention. As illustrated in the diagram, in the normal use time, in the standby state, an exhaust line 11 side of the solenoid valve 2 connected to the cylinder (air operated valve actuator) 8 is open. An exhaust line 13 side of the switching valve 3 is open.

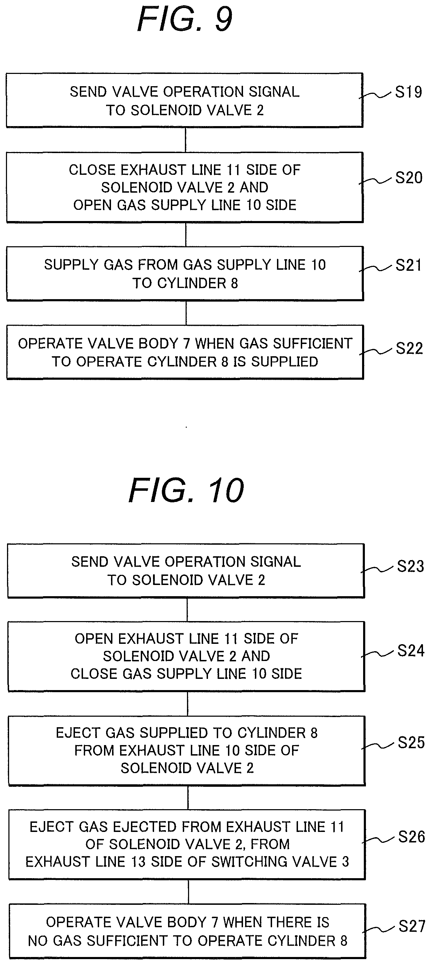

Figs. 4 and 9 illustrate a state and a flow at the time of gas supply when the gas supply apparatus of the embodiment is normally used. As illustrated in the diagrams, when a valve operation signal is supplied to the solenoid valve 2 (step 19), the solenoid valve 2 closes the exhaust line 11 side and opens a gas supply line 10 side (step 20). Gas such as compressed air or compressed nitrogen is supplied from the gas supply line 10 of the solenoid valve 2 to the cylinder 8 (step 21), and the valve body 7 operates (step 22).

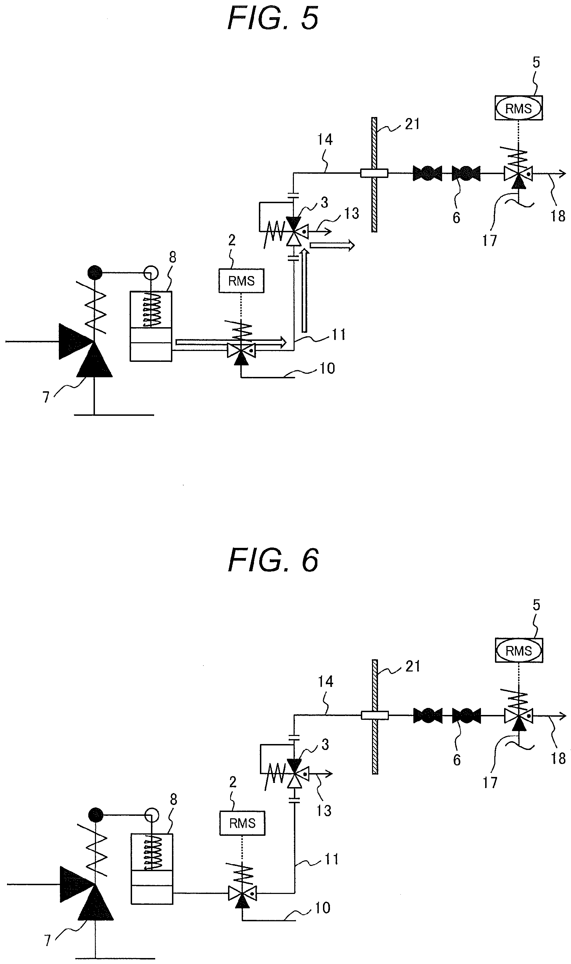

Figs. 5 and 10 illustrate a state and a flow at the time of exhaust when the gas supply apparatus of the embodiment is normally used. As illustrated in the diagrams, at the time of reset to the standby state, a signal is transmitted to the solenoid valve 2 (step 23) to close the gas supply line 10 side of the solenoid valve 2 and open the exhaust line 11 (step 24) . Consequently, the gas supplied to the cylinder 8 is ejected from the exhaust line 11 side of the solenoid valve 2 (step 25) and ejected from the exhaust line 13 (connected to a connection port E of the switching valve 3 in Figs. 1 and 2) of the switching valve 3 (step 26). When there is no gas sufficient to operate the cylinder 8, the valve body 7 is operated (step 27) and the apparatus returns to a standby state. Although the standby state is set to "close" and the operation state is set to "open" as an example, the operation in the opposite manner is also possible.

Fig. 6 illustrates a standby state at the time of a severe accident such as station blackout, of the gas supply apparatus of the embodiment. As illustrated in the diagram, at the time of a severe accident such as loss of all of powers, due to loss of power, the exhaust line 11 side of the solenoid valve 2 is open, and the solenoid valve 2 waits in a state where it cannot be operated from the outside.

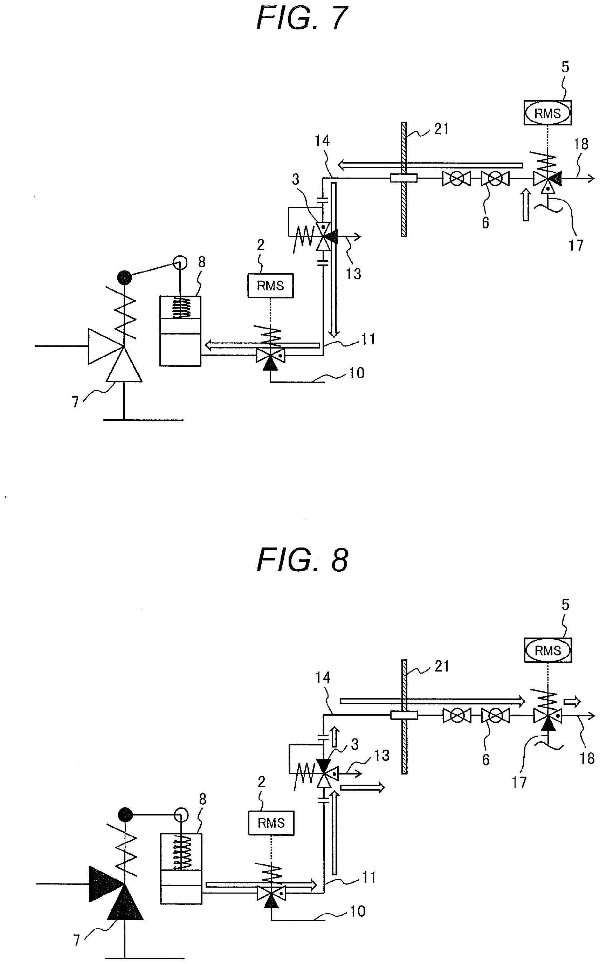

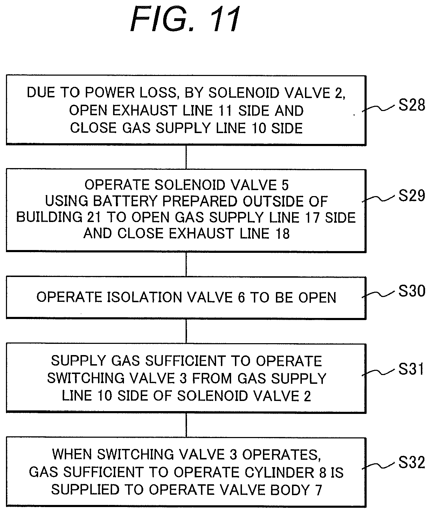

Figs. 7 and 11 illustrate a state and a flow of gas supply at the time of a severe accident of the gas supply apparatus of the embodiment. As illustrated in the diagrams, due to loss of power, the solenoid valve 2 opens the exhaust line 11 side (connected to a connection port A of the switching valve 3 in Figs. 1 and 2) and closes the gas supply line 10 side (step 28) . To operate the valve body 7 from the outside, a gas supply line 17 side of the second solenoid valve 5 using a battery on the outside of the building 21 as a drive source is opened, and an exhaust line 18 is closed (step 29) . Next, the isolation valve 6 is operated to be open (step 30), thereby supplying gas sufficient to operate the switching valve 3 from a gas supply line 14 (connected to a connection port P of the switching valve 3 in Figs. 1 and 2) of the second solenoid valve 5 (step 31) . By the supplied gas, the switching valve 3 closes the exhaust line 13 (the connection port E of the switching valve 3 in Figs. 1 and 2) and opens the gas supply line 14 (the connection port P of the switching valve 3 in Figs. 1 and 2) . The gas supplied from the outside of the building 21 passes from the gas supply line 14 (connected to the connection port P of the switching valve 3 in Figs. 1 and 2) of the switching valve 3 to the exhaust line 11 (connected to the connection port A of the second switching valve 3 in Figs. 1 and 2) of the solenoid valve 2 and reaches the cylinder 8. By filling the cylinder 8 with gas pressure sufficient to operate the valve body 7, the valve body 7 operates (step 32).

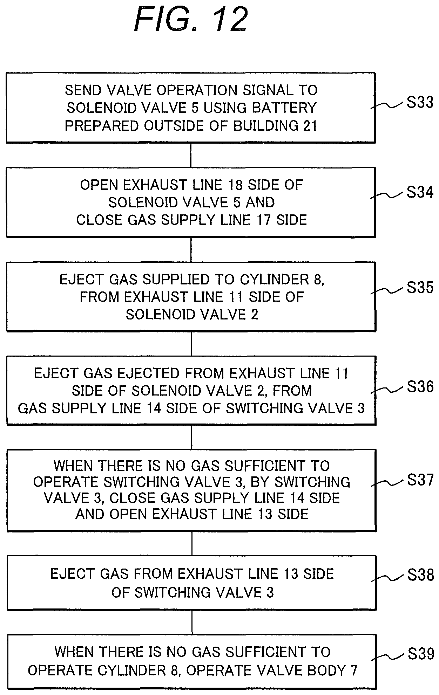

Figs. 8 and 12 illustrate a state and a flow of exhaust at the time of a severe accident of the gas supply apparatus of the embodiment. As illustrated in the diagrams, a valve operation signal is sent to the second solenoid valve 5 using a battery on the outside of the building 21 as a drive source (step 33). In the case of resetting the valve body 7 to the standby state, the exhaust line 18 side of the second solenoid valve 5 on the outside of the building 21 is opened, and the supply line 17 side is closed (step 34). The gas supplied to the cylinder 8 is ejected from the exhaust line 11 side of the solenoid valve 2 (step 35), and the gas ejected from the exhaust line 11 (connected to the connection port A of the switching valve 3 in Figs. 1 and 2) of the solenoid valve 2 is ejected from the gas supply line 14 (connected to the connection port P of the switching valve 3 in Figs. 1 and 2) of the switching valve 3 via the exhaust line 18 of the second solenoid valve 5 on the outside of the building 21 (step 36). When there is no gas sufficient to operate the switching valve 3, the switching valve 3 closes the gas supply line 14 (connected to the connection port P of the switching valve 3 in Figs. 1 and 2) and opens the exhaust line 13 side (connected to the connection port E of the switching valve 3 in Figs. 1 and 2) (step 37). The gas remaining in the cylinder 8 is ejected from the exhaust line 11 side of the solenoid valve 2 (step 38) and ejected into the building 21 from the exhaust line 13 (connected to the connection port E of the switching valve 3 in Figs. 1 and 2) of the switching valve 3. When there is no gas sufficient to operate the cylinder 8, the valve body 7 is operated (step 39) and the apparatus returns to a standby state. Although the standby state is set to "close" and the operation state is set to "open" as an example, the operation in the opposite manner is also possible.

As described above, in the embodiment, the switching valve 3 is connected in some midpoint in the piping 20A on the side of the exhaust line 11 of the solenoid valve 2 and, at the time of power loss, gas such as air or nitrogen is supplied by the tank 4 or the like from the outside of the building 21. Consequently, air or nitrogen for operation is supplied to the switching valve 3, the switching valve 3 connected to the exhaust side in normal time is switched to the gas supply side, and air or nitrogen can be supplied to the solenoid valve at the time of power loss. The pressure at which the switching valve 3 switched is sufficiently higher than the pressure in the building 21. During operation of the switching valve 3, the atmosphere in the building 21 does not flow to the outside of the building 21 via the second solenoid valve 5.

There is consequently an effect that the operation valve such as the air operated valve can be remotely operated also at the time of power loss. By differentiating the type of the power supply of the second solenoid valve 5 (AC power supply or DC power supply) from that of the solenoid valve 2 which is usually used, there is also an effect that the drive sources can be diversified.

By having a power supply (for example, a battery) different from the power supply in the building 21, the safety of the equipment supplying air or nitrogen to the switching valve 3 can be increased. As further backup, gas may be supplied by a manual valve.

### Second Embodiment

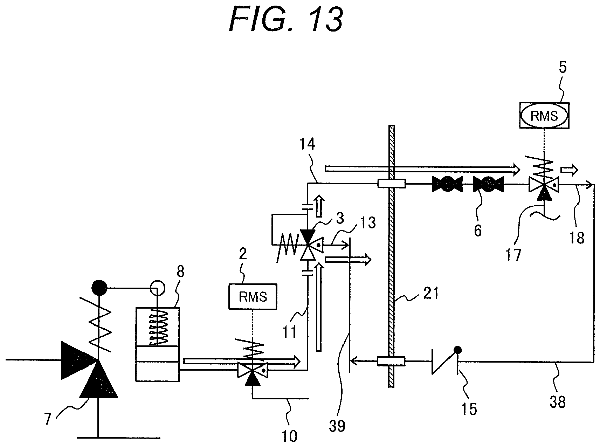

Fig. 13 illustrates a second embodiment of a gas supply apparatus of the present invention. The configuration of the second embodiment illustrated in the diagram is almost similar to that of the foregoing embodiment but is different from the configuration of the first embodiment with respect to points that the exhaust line 13 of the switching valve 3 in the building 21 is connected to a gas treatment line 39 and the exhaust line 18 of the second solenoid valve 5 is connected to the gas treatment line 39 via a line 38 provided with a check valve 15 on the outside of the building 21.

According to the embodiment as described above, obviously, the effects similar to those of the first embodiment are obtained. By connecting the exhaust line 18 of the second solenoid valve 5 to the gas treatment line 39 via the line 38 provided with the check valve 15, the safety of an operator can be further improved.

In the case where the gas treatment line 39 is provided only on the outside of the building 21, also by connecting the exhaust line 18 of the second solenoid valve 5 directly to the gas treatment line 39 on the outside of the building 21 without via the line 38 provided with the check valve 15, the safety of an operator can be improved.

### First example useful for understanding the present invention

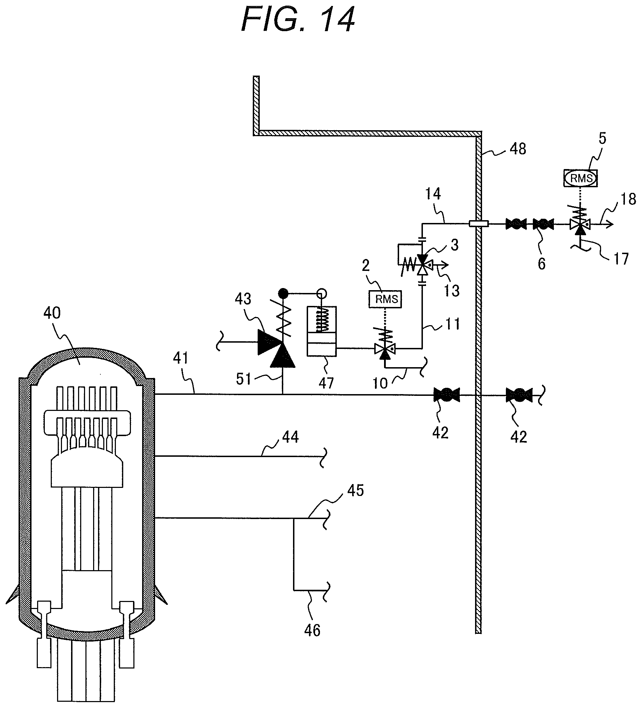

Fig. 14 illustrates an air or nitrogen supply apparatus of an nuclear power plant as a first example useful for understanding the present invention.

As illustrated in the diagram, the air or nitrogen supply apparatus of an nuclear power plant of the example useful for understanding the present invention is, schematically, constructed by including: a main steam relief safety valve 43 provided for a piping 51 branched from a main steam piping 41 for supplying steam from a nuclear reactor pressure vessel 40 housed in a nuclear reactor containment vessel 48 to a turbine island (not illustrated) and, when pressure in a nuclear reactor becomes equal to or larger than a predetermined value, performing opening operation to allow main steam in the main steam piping 41 to escape; a cylinder 47 for forced operation supplying air or nitrogen as a drive force to the main steam relief safety valve 43 to make the main steam relief safety valve 43 forcedly perform opening operation; the solenoid valve 2 allowing/stopping flow of air or nitrogen to the cylinder 47 for forced operation; and an air or nitrogen supply source (although not illustrated, gasifying nitrogen in a high-pressure gas accumulator, or in a tank similar to that in the first embodiment, or liquid nitrogen and supplying the nitrogen gas) mounted on the outside of the nuclear reactor containment vessel 48 supplying air or nitrogen independently to a gas supply port and an exhaust port of the solenoid valve 2 via a piping.

In the example useful for understanding the present invention, the switching valve 3 for switching between exhaust from the solenoid valve 2 and gas supply to the solenoid valve 2 is mounted in an exhaust line of the solenoid valve 2 in the nuclear reactor containment vessel 48 and, at the time of power loss, the switching valve 3 is switched to connection, via the gas supply line 17 of the second solenoid valve 5, to another air or nitrogen supply source (tank) different from the air or nitrogen supply source mounted on the outside of the nuclear reactor containment vessel 48 via the piping in order to supply air or nitrogen to the solenoid valve 2.

The tank as the air or nitrogen supply source is connected via the second solenoid valve 5 mounted in the piping 20B on the outside of the nuclear reactor containment vessel 48 supplying air or nitrogen from the tank 4 to the switching valve 3, and the second solenoid valve 5 is a singular switching valve or a plurality of switching valves from three valves using, as a power source, an alternate current power source or a direct current power source, a direct current power source (for example, a battery), and a hand motion and the operation of the second solenoid valve is similar to that in the first embodiment. Further, the isolation valve 6 preventing leakage to the gas supply side of the switching valve 3 is mounted in some midpoint of the piping on the outside of the nuclear reactor containment vessel 48 on the tank side of the switching valve 3. A configuration of preventing leak to the gas supply side of the switching valve 3 by the isolation valve 6 is obtained.

Usually, steam is supplied from the nuclear reactor pressure vessel 40 to the turbine island via the main steam piping 41. However, when a disaster such as an earthquake is detected, to prevent loss of coolant accident (LCOA) caused by breakage of the piping, a main steam isolation valve 42 provided for the main steam piping 41 is closed. In this case, the temperature in the nuclear reactor continuously increases by heat degradation of nuclear fuel, and the pressure in the nuclear reactor also rises with generation of steam. In the case where the pressure of the nuclear reactor becomes equal to or larger than a predetermined value, the main steam relief safety valve 43 provided for the piping 51 branched from the main steam piping 41 operates, thereby decreasing the pressure of the nuclear reactor. At this time, the switching valve 3 does not exert influence on the operation of the main steam relief safety valve 43.

Although cooling of the nuclear reactor is performed by a high-pressure core water injection system 44 or a low-pressure core water injection system 45, desirably, it is desirable to also enable water injection by an emergency pumper truck or the like from an external water injection line 46 at the time of station blackout (SBO).

In the case where the pressure in the nuclear reactor is higher than that of water injection, the pressure in the nuclear reactor has to be decreased. Since the safety valve function of the main steam relief safety valve 43 does not work until the pressure in the nuclear reactor becomes predetermined pressure, the main steam relief safety valve 43 has to be forcedly operated to be open by using the relief valve function of the main steam relief safety valve 43.

The relief valve function of the main steam relief safety valve 43 is a function of opening the main steam relief safety valve 43 by supplying gas such as nitrogen or compressed air accumulated in an accumulator to the cylinder 47 for forced operation of the main steam relief safety valve 43.

In the example useful for understanding the present invention, at the time of a severe accident such as station blackout, the solenoid valve 2 for supplying compressed air or compressed nitrogen to the main steam relief safety valve 43 becomes also inoperable and waits in a state where the exhaust side is open. After that, by connecting the switching valve 3 to the exhaust line 11 side of the solenoid valve 2, supplying air or nitrogen for operation from the air or nitrogen supply source such as a tank provided on the outside of the nuclear reactor containment vessel 48 to the switching valve 3, switching the switching valve 3 connected to the exhaust side in normal time, and supplying the air or nitrogen for operation to the solenoid valve 2, also at the time of station blackout, the main seam relief safety valve 43 can be operated by supplying air or nitrogen to the cylinder 47 for forced operation.

When the main steam relief safety valve 43 operates, the pressure of the nuclear reactor pressure vessel 40 is reduced so as to be escaped to a connection line of a suppression chamber. When the pressure of the nuclear reactor pressure vessel 40 is reduced, water can be injected from the external water injection line 46, and the nuclear reactor can be stopped at low temperature.

### Second example useful for understanding the present invention

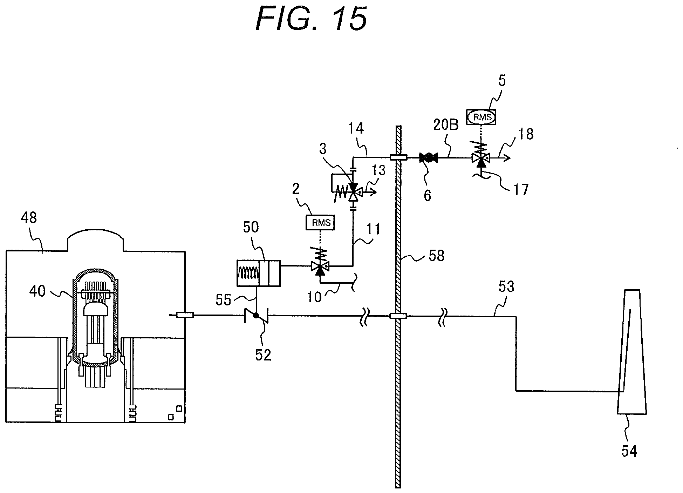

Fig. 15 illustrates an air or nitrogen supply apparatus of an nuclear power plant as a second example useful for understanding the present invention.

As illustrated in the diagram, an air or nitrogen supply apparatus of an nuclear power plant of the example useful for understanding the present invention is, schematically, constructed by including: the solenoid valve 2 connected to an air or nitrogen operation valve 50 for supplying drive force to a driving unit (such as a cylinder) driving an open/close valve 52 mounted in an standby gas treatment system (emergency gas treatment equipment or filtered vent equipment) 53 releasing, from an exhaust tower 54, gas from the nuclear reactor containment vessel 48 in which the nuclear reactor pressure vessel 40 is housed and performing opening and closing to supply/stop flow of air or nitrogen to a driving unit (such as a cylinder) of the air or nitrogen operation valve 50; and an air or nitrogen supply source (although not illustrated, gasifying nitrogen in a tank similar to that in the first embodiment or liquid nitrogen and supplying the nitrogen gas) mounted on the outside of the nuclear reactor containment vessel 48 supplying air or nitrogen independently to a gas supply port and an exhaust port of the solenoid valve 2.

In the example useful for understanding the present invention, the switching valve 3 for switching to gas supply to the solenoid valve 2 is mounted in the exhaust line 11 from the solenoid valve 2. At the time of power loss, the switching valve 3 is switched to connection, via the gas supply line 17 of the second solenoid valve 5, to another air or nitrogen supply source (tank) different from the air or nitrogen supply source mounted on the outside of a nuclear reactor building 58 via the piping 10 to supply air or nitrogen to the solenoid valve 2.

Via the above-described switching valve 3, the tank as the air or nitrogen supply source to which the line supplying air or nitrogen to the air or nitrogen operation valve 50 via the solenoid valve 2 is connected is connected, in a manner similar to the first embodiment, via the second solenoid valve 5 mounted in the piping 20B on the outside of the nuclear reactor building 58 supplying air or gas from the tank 4 to the switching valve 3 . The second solenoid valve 5 is constructed by a singular valve or a plurality of valves from three valves using, as a power source, an alternate current power source or a direct current power source, a direct current power source (for example, a battery), and a hand motion and the operation is similar to that in the first embodiment. Further, the isolation valve 6 preventing leakage to the gas supply side of the switching valve 3 is mounted in some midpoint of the piping on the outside of the nuclear reactor containment vessel 48 on the tank side of the switching valve 3. A configuration of preventing leak to the gas supply side of the switching valve 3 by the isolation valve 6 is obtained.

Usually, at the time of a severe accident such as station blackout, the solenoid valve 2 for supplying compressed air or compressed nitrogen to the air or nitrogen operation valve 50 also becomes inoperable and waits in a state where the exhaust side is open. In the example useful for understanding the present invention, by connecting the switching valve 3 to the exhaust line 11 side of the solenoid valve 2, supplying air or nitrogen for operation from the air or nitrogen supply source such as a tank provided on the outside of the nuclear reactor containment vessel 48 to the switching valve 3, switching the switching valve 3 connected to the exhaust side in normal time to the gas supply side, and supplying the air or nitrogen for operation to the solenoid valve 2, also at the time of station blackout, air or nitrogen is supplied to the air or nitrogen operation valve 50 . By controlling the flow of air or nitrogen to the air or nitrogen operation valve 50, the opening and closing action of the open/close valve 52 can be performed. The pressure in the nuclear reactor containment vessel 48 can be reduced by being ejected from an ejection tower 54 via a standby gas treatment system (gas treatment equipment for emergency or filtered-vent equipment) 53.

### Third example useful for understanding the present invention

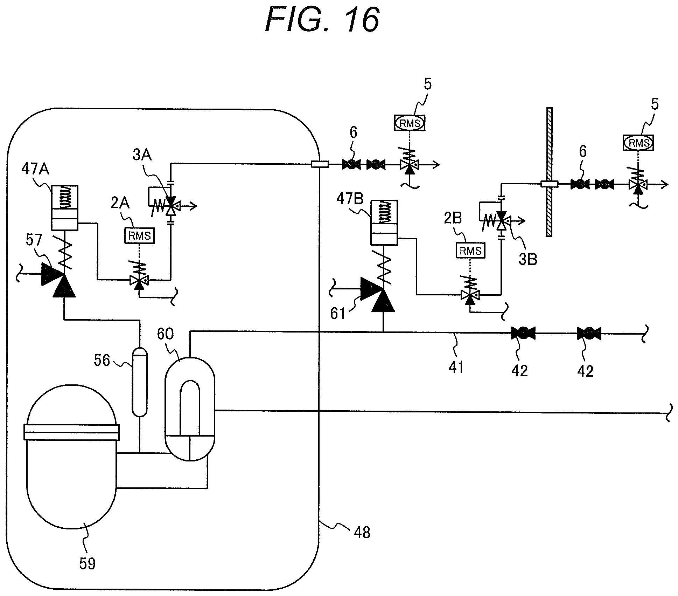

Fig. 16 illustrates a case where a gas supply apparatus as a third example useful for understanding the present invention is applied to a pressurizer relief valve and a main steam relief valve in a pressurized-water reactor.

As illustrated in the diagram, the pressurized-water reactor sends hot water generated by a nuclear reactor pressure vessel 59 to a steam generator 60. By steam generated by the steam generator 60, a turbine (not illustrated) mounted on the outside of the nuclear reactor building 58 is rotated to obtain power. In this case, to pressurize the hot water generated by the nuclear reactor pressure vessel 59 and keep in liquid state, a pressurizer 56 for maintaining the pressure and water level of the nuclear reactor pressure vessel 59 is provided between the nuclear reactor pressure vessel 59 and the steam generator 60, and a main steam relief valve 61 is provided in some midpoint of the main steam piping 41 sending steam to the turbine. The main steam relief valve 61 is provided with a cylinder 47B for forced operation.

On the other hand, the pressurizer 56 and the pressurizer relief valve 57 for forcedly reducing the pressure in the pressurizer 56 as necessary are provided, and the pressurizer relief valve 57 is provided with a cylinder 57A for forced operation.

Since the pressurizer relief valve 57 and the main steam relief valve 61 become inoperable at the time of SBO, by providing the above-described switching valve, reduction in the pressure in the nuclear reactor pressure vessel 59 or reduction in the pressure in the steam generator 60 can be carried out safely.

A gas supply apparatus to be applied to the pressurized-water reactor illustrated in Fig. 16 includes: the main steam relief valve 61 connected to the nuclear reactor pressure vessel 59 by the main steam piping 41 and allowing steam in the steam generator 60 supplying cooling water to the nuclear reactor pressure vessel 59 to escape; the cylinder 47B for forced operation supplying air or nitrogen accumulated on the inside to the main steam relief safety valve 61 to make the main steam relief valve 61 perform opening operation; the solenoid valve 2B mounted in some midpoint of the main steam piping 41 and allowing/stopping flow of air or nitrogen in the main steam piping 41; and the air or nitrogen supply source such as a tank supplying air or nitrogen to the solenoid valve 2B.

In the example useful for understanding the present invention, in the exhaust line of the solenoid valve 2B, a switching valve 3B for switching between exhaust from the solenoid valve 2B and gas supply to the solenoid valve 2B is mounted in an exhaust line of the solenoid valve 2B and, at the time of power loss, the switching valve 3B is switched to connection to the air or nitrogen supply source for supplying air or nitrogen to the solenoid valve 2B.

The pressurizer relief valve 57 installed in some midpoint of the piping between the nuclear reactor pressure vessel 59 and the pressurizer 56 for maintaining the pressure and water level of the nuclear reactor pressure vessel 59 and forcedly reducing the pressure in the pressurizer 56 as necessary has the cylinder 47A for forced operation supplying air or nitrogen accumulated on the inside to the pressurizer relief valve 56 to make the pressurizer relief valve 57 perform opening operation and the solenoid valve 2A installed in some midpoint of the piping and allowing/stopping the flow of air or nitrogen to the cylinder 47A for forced operation. To the solenoid valve 2A, air or nitrogen is supplied by an air or nitrogen supply source such as a tank.

In the example useful for understanding the present invention, the switching valve 3A switching between exhaust from the solenoid valve 2A and gas supply to the solenoid valve 2A is mounted in the exhaust line of the solenoid valve 2A. At the time of power loss, the switching valve 3A is switched to connection to the air or nitrogen supply source to supply air or nitrogen to the solenoid valve 2A.

With such a configuration of the example useful for understanding the present invention, even when the pressurizer relief valve 57 and/or the main steam relief valve 61 become inoperable at the time of SBO, by switching the switching valves 3A and 3B, gas such as air or nitrogen can be supplied from the gas supply source such as a tank. Thus, effects similar to those of the foregoing embodiments and examples can be obtained.

Although the air or nitrogen operation valve has been described in the foregoing embodiments and examples, the invention can be also applied to a safety valve, a relief valve, or a safety relief valve. The present invention can be applied not only to an nuclear power plant but also to a chemical plant, an oil plant, an electric power generating facility, and the like. As a gas supplied, carbon dioxide can be used except for air and nitrogen.

Further, the present invention is not limited to the foregoing embodiments and examples but includes various modifications. For example, the foregoing embodiments and examples have been described in detail to explain the present invention in an easily understood manner, and the invention is not always limited to an apparatus having all of the components described. A part of the configuration of an embodiment or an example can be replaced with the configuration of another embodiment or example, and the configuration of an embodiment or example can be added to the configuration of another embodiment or example. On a part of the configuration of each embodiment or example, addition, deletion, or replacement of another configuration can be performed.

## Claims

1. A nuclear power plant including a gas supply apparatus comprising:
an operation valve mounted in some midpoint of a piping (20A, 20B) for passing at least gas in the nuclear power plant and operating a valve body by the gas flowing in the piping (20A, 20B);
a first solenoid valve (2) mounted in some midpoint of the piping (20A, 20B) and allowing/stopping flow of the gas to the operation valve;
a gas supply source provided outside a building (21) for supplying gas to the first solenoid valve (2) at the time of power loss, and
a gas supply line (10) provided inside the building (21) for supplying gas to the first solenoid valve (2) in normal use time,
wherein a switching valve (3) for switching between exhaust from the first solenoid valve (2) and gas supply to the first solenoid valve (2) is mounted in an exhaust line of the first solenoid valve (2) and, at the time of power loss, the switching valve (3) is switched to connection to the gas supply source for supplying gas to the first solenoid valve (2), and the gas supply source is connected to the piping (20A, 20B) via a second solenoid valve (5), mounted in the piping (20B) outside of the building (21) and driven by a power supply of a kind different from that of the first solenoid valve (2) or a manual valve.

2. The gas supply apparatus according to claim 1, wherein the operation valve is an air operated valve, a safety valve, a relief valve, or a safety relief valve.

3. The gas supply apparatus according to claim 1, wherein the second solenoid valve (5) uses at least a direct current power source as a power source and, at the time of power loss, drives the second solenoid valve (5) using the direct current power source as a drive source to supply gas from the gas supply source to the first solenoid valve (2).

4. The gas supply apparatus according to claim 1, wherein the second solenoid valve (5) is a singular switching valve or a plurality of switching valves using each of an alternate current power source or a direct current power source, a direct current power source, and a hand motion and, at the time of power loss, by driving the first solenoid valve (2) using the direct current power source as a drive source or operating the manual valve, gas is supplied from the gas supply source to the first solenoid valve (2).

5. The gas supply apparatus according to claim 3 or 4, wherein the direct current power source is a battery.

6. The gas supply apparatus according to any one of claims 1 to 5, wherein an isolation valve (6) for preventing leak to a gas supply side of the switching valve (3) is mounted in some midpoint of a piping (20A, 20B) on the gas supply source side of the switching valve (3).

7. The gas supply apparatus according to any one of claims 1 to 6, wherein an exhaust side of the switching valve (3) is connected to a gas treatment line (39), and an exhaust-side line of the second solenoid valve (5) is connected to the gas treatment line (39).

8. The gas supply apparatus according to any one of claims 1 to 7, wherein the gas supply source is a tank (4) in which air, nitrogen, or carbon dioxide is stored.

## Patentansprüche

1. Kernkraftwerk mit einer Gasversorgungsvorrichtung, umfassend:
- ein Betriebsventil, das in einem Mittelpunkt einer Rohrleitung (20A, 20B) angebracht ist, um mindestens Gas in das Kernkraftwerk zu leiten und um einen Ventilkörper durch das in der Rohrleitung (20A, 20B) strömende Gas zu betreiben;
- ein erstes Magnetventil (2), das in einem Mittelpunkt der Rohrleitung (20A, 20B) angebracht ist und den Durchfluss des Gases zum Betriebsventil zulässt bzw. stoppt;
- eine Gasversorgungsquelle, die außerhalb eines Gebäudes (21) zum Zuführen von Gas zum ersten Magnetventil (2) zum Zeitpunkt des Leistungsverlustes vorgesehen ist, und
- eine Gasversorgungsleitung (10), die innerhalb des Gebäudes (21) zum Zuführen von Gas zum ersten Magnetventil (2) in normaler Gebrauchszeit vorgesehen ist, wobei ein Schaltventil (3) zum Umschalten zwischen Abgas vom ersten Magnetventil (2) und Gaszufuhr zum ersten Magnetventil (2) in einer Abgasleitung des ersten Magnetventils (2) angebracht ist und, zum Zeitpunkt des Stromausfalls das Schaltventil (3) auf Anschluss an die Gasversorgungsquelle zur Gasversorgung des ersten Magnetventils (2) geschaltet wird und die Gasversorgungsquelle über ein zweites Magnetventil (5) mit der Rohrleitung (20A, 20B) verbunden ist, das in der Rohrleitung (20B) außerhalb des Gebäudes (21) angebracht und von einer anderen Stromversorgung als dem des ersten Magnetventils (2) oder einem manuellen Ventil angetrieben wird.

2. Gasversorgungsvorrichtung nach Anspruch 1, wobei das Betriebsventil ein druckluftbetätigtes Ventil, ein Sicherheitsventil, ein Überdruckventil oder ein Sicherheits-Entlastungsventil ist.

3. Gasversorgungsvorrichtung nach Anspruch 1, wobei das zweite Magnetventil (5) mindestens eine Gleichstromquelle als Energiequelle verwendet und zum Zeitpunkt des Leistungsverlustes das zweite Magnetventil (5) unter Verwendung der Gleichstromquelle als Antriebsquelle antreibt, um Gas von der Gasversorgungsquelle zum ersten Magnetventil (2) zu liefern.

4. Gasversorgungsvorrichtung nach Anspruch 1, wobei das zweite Magnetventil (5) ein einzelnes Schaltventil ist oder mehrere Schaltventile aufweist, die jeweils eine Wechselstromquelle oder eine Gleichstromquelle, eine Gleichstromquelle und eine Handbewegung verwenden, und bei einem Leistungsverlust durch Antreiben des ersten Magnetventils (2) unter Verwendung der Gleichstromquelle als Antriebsquelle oder Betreiben des manuellen Ventils Gas von der Gasversorgungsquelle zum ersten Magnetventil (2) zugeführt wird.

5. Gasversorgungsvorrichtung nach Anspruch 3 oder 4, wobei die Gleichstromquelle eine Batterie ist.

6. Gasversorgungsvorrichtung nach einem der Ansprüche 1 bis 5, wobei ein Absperrventil (6) zum Verhindern von Leckagen zu einer Gasversorgungsseite des Schaltventils (3) in einem Mittelpunkt einer Rohrleitung (20A, 20B) und der Gasversorgungsquellenseite des Schaltventils (3) angebracht ist.

7. Gasversorgungsvorrichtung nach einem der Ansprüche 1 bis 6, wobei eine Auslassseite des Schaltventils (3) mit einer Gasbehandlungsleitung (39) und eine auslassseitige Leitung des zweiten Magnetventils (5) mit der Gasbehandlungsleitung (39) verbunden ist.

8. Gasversorgungsvorrichtung nach einem der Ansprüche 1 bis 7, wobei die Gasversorgungsquelle ein Tank (4) ist, in dem Luft, Stickstoff oder Kohlendioxid gespeichert ist.

## Revendications

1. Centrale électrique nucléaire incluant un appareil d'alimentation de gaz, comprenant :
une vanne opérationnelle montée dans un point médian d'une tuyauterie (20A, 20B) pour faire passer au moins un gaz dans la centrale électrique nucléaire et pour actionner un corps de vanne au moyen du gaz s'écoulant dans la tuyauterie (20A, 20B) ;
une première vanne à solénoïde (2) montée dans un point médian de la tuyauterie (20A, 20B) et autorisant/arrêtant un écoulement du gaz vers la vanne opérationnelle ;
une source d'alimentation de gaz prévue à l'extérieur d'un bâtiment (21) pour alimenter un gaz vers la première vanne à solénoïde (2) au moment de la perte de puissance, et
une conduite d'alimentation de gaz (20) prévue à l'intérieur du bâtiment (21) pour alimenter un gaz vers la première vanne à solénoïde (2) au moment d'une utilisation normale,
dans laquelle une vanne de commutation (3) pour commuter entre un échappement depuis la première vanne à solénoïde (2) et une alimentation de gaz vers la première vanne à solénoïde (2) est montée dans une conduite d'échappement de la première vanne à solénoïde (2) et, au moment d'une perte de puissance, la vanne de commutation (3) est commutée vers une connexion à la source d'alimentation de gaz pour alimenter le gaz vers la première vanne à solénoïde (2), et
la source d'alimentation de gaz est connectée à la tuyauterie (20A, 20B) via une deuxième vanne à solénoïde (5), montée dans la tuyauterie (20B) à l'extérieur du bâtiment (21), et est entraînée par une alimentation d'énergie de type différent de celui de la première vanne à solénoïde (2) ou par une vanne manuelle.

2. Appareil d'alimentation de gaz selon la revendication 1, dans lequel la vanne opérationnelle est une vanne actionnée à air, une vanne de sûreté, une vanne de détente ou une vanne de détente et de sûreté.

3. Appareil d'alimentation de gaz selon la revendication 1, dans lequel la deuxième vanne à solénoïde (5) utilise au moins une source d'énergie à courant continu à titre de source d'énergie et, au moment d'une perte de puissance, entraîne la deuxième vanne à solénoïde (5) en utilisant la source d'énergie à courant continu à titre de source d'entraînement pour alimenter un gaz depuis la source d'alimentation de gaz vers la première vanne à solénoïde (2).

4. Appareil d'alimentation de gaz selon la revendication 1, dans lequel la deuxième vanne à solénoïde (5) est une unique vanne de commutation ou une pluralité de vannes de commutation qui utilisent chacune une source d'énergie parmi une source d'énergie à courant alternatif ou une source d'énergie à courant continu, une source d'énergie à courant continu et un mouvement manuel et, au moment d'une perte de puissance, en entraînant la première vanne à solénoïde (2) en utilisant la source d'énergie à courant continu à titre de source d'entraînement ou en actionnant la vanne manuelle, un gaz est alimenté depuis la source d'alimentation de gaz vers la première vanne à solénoïde (2).

5. Appareil d'alimentation de gaz selon la revendication 3 ou 4, dans lequel la source d'énergie à courant continu est une batterie.

6. Appareil d'alimentation de gaz selon l'une quelconque des revendications 1 à 5, dans lequel une vanne d'isolation (6) destinée à éviter une fuite d'une alimentation de gaz du côté de la vanne (3) est montée dans un point médian d'une tuyauterie (20A, 20B) sur le côté de la source d'alimentation de gaz de la vanne de commutation (3).

7. Appareil d'alimentation de gaz selon l'une quelconque des revendications 1 à 6, dans lequel un côté d'échappement de la vanne de commutation (3) est connecté à une conduite de traitement de gaz (39), et une conduite côté échappement de la deuxième vanne à solénoïde (5) est connectée à la conduite de traitement de gaz (39).

8. Appareil d'alimentation de gaz selon l'une quelconque des revendications 1 à 7, dans lequel la source d'alimentation de gaz est un réservoir (4) dans lequel de l'air, de l'azote ou du dioxyde de carbone est stocké.
